(19) Europäisches Patentamt
European Patent Office
Office européen des brevets

(11) **EP 4 430 954 A1**

(12) **EUROPEAN PATENT APPLICATION**
published in accordance with Art. 153(4) EPC

(43) Date of publication:
**18.09.2024 Bulletin 2024/38**

(21) Application number: **22892814.9**

(22) Date of filing: **09.11.2022**

(51) International Patent Classification (IPC):
*A23J 3/14* (2006.01)    *A23J 3/00* (2006.01)
*A23L 13/00* (2016.01)

(52) Cooperative Patent Classification (CPC):
**A23J 3/00; A23J 3/14; A23L 13/00**

(86) International application number:
**PCT/JP2022/041704**

(87) International publication number:
**WO 2023/085316 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.11.2021 JP 2021182521**

(71) Applicant: **Amano Enzyme Inc.**
**Nagoya-shi**
**Aichi 460-8630 (JP)**

(72) Inventor: **SAKAI, Kiyota**
**Kakamigahara-shi, Gifu 509-0109 (JP)**

(74) Representative: **Müller-Boré & Partner**
**Patentanwälte PartG mbB**
**Friedenheimer Brücke 21**
**80639 München (DE)**

(54) **PRODUCTION METHOD FOR TEXTURED VEGETABLE PROTEIN?CONTAINING FOOD PRODUCT**

(57)    The purpose of the present invention is to provide a textured plant protein-containing food product having improved liquid retainability. By using a production method for a textured plant protein-containing food product that includes a step of causing a protein deamidase to act on a textured plant protein material, it is possible to improve the liquid retainability of a textured plant protein-containing food product to be obtained.

EP 4 430 954 A1

**Description**

TECHNICAL FIELD

The present invention relates to a production method for a textured plant protein-containing food product. More specifically, the present invention relates to a processing technique for enhancing the liquid retainability of a textured plant protein-containing food product.

BACKGROUND ART

In recent years, in the food market, the share of food products using a textured plant protein material as a substitute for an animal protein (hereinafter, referred to as textured plant protein-containing food products) has increased. The textured plant protein-containing food products have been used for some target consumers such as vegetarian or vegan, but the trend of demand has changed in recent years, and attention has been paid again in response to an increase in awareness of health consciousness, diet, environmental problems, animal welfare, and the like.

For the purpose of imparting characteristics close to animal protein food products to textured plant protein-containing food products, various techniques have been studied. For example, Patent Document 1 discloses a method for manufacturing a meat-granular protein-containing food product in which a granular defatted soybean protein, which is obtained by performing rehydration of a dry granular defatted soybean protein using a cold or hot weak alkaline solution, is mixed with egg white or egg white powder, for the purpose of manufacturing a meat-granular protein-containing food product which does not lose its shape even after cooking and has juiciness and an elastic feeling. Patent Document 2 discloses a method for manufacturing a frozen livestock meat-like processed food product in which an emulsion curd containing a soybean protein material, water, and oils and fats and prepared by homogenizing these components in a predetermined temperature range is dispersed in a livestock meat like processed food product dough with a predetermined particle size, and heated and frozen for the purpose of obtaining a livestock meat like processed food product having a juicy feeling after thawing.

PRIOR ART DOCUMENTS

PATENT DOCUMENTS

Patent Document 1: Japanese Patent Laid-open Publication No. 2013-009617
Patent Document 2: Japanese Patent Laid-open Publication No. 2018-029565

SUMMARY OF THE INVENTION

PROBLEMS TO BE SOLVED BY THE INVENTION

A textured plant protein-containing food product has a composition fundamentally different from that of an animal protein food product, and thus there is still room for improvement in order to obtain satisfactory characteristics. For example, the liquid retainability is related to a juicy texture and absorbability of a seasoning liquid, and is desired to be further improved as an important property for imparting a taste to a textured plant protein-containing food product.

Therefore, an object of the present invention is to provide a textured plant protein-containing food product having improved liquid retainability.

MEANS FOR SOLVING THE PROBLEM

The present inventor has conducted intensive studies, and as a result, has found that the liquid retainability of a textured plant protein-containing food product to be obtained is improved by performing a treatment of causing a protein deamidase to act on a textured plant protein material. The present inventors have conducted further studies based on the findings, leading to the completion of the present invention.

That is, the present invention provides inventions of the following aspects.

Item 1. A production method for a textured plant protein-containing food product, the production method including a step of causing a protein deamidase to act on a textured plant protein material.

Item 2. The production method described in item 1, in which the protein deamidase is protein glutaminase.

Item 3. The production method described in item 1 or 2, in which the textured plant protein-containing food product is a meat-like processed food product.

Item 4. A textured plant protein-containing food product produced by the production method described in any one of items 1 to 3.

Item 5. A liquid retainability improver for a textured plant protein-containing food product, the liquid retainability improver containing a protein deamidase.

Item 6. An improver for cohesiveness, elasticity and/or mastication property of a textured plant protein-containing food product, the improver containing a protein deamidase.

Item 7. An agent for lessening a plant raw material odor of a textured plant protein-containing food product, the agent containing a protein deamidase.

ADVANTAGES OF THE INVENTION

According to the present invention, there is provided a textured plant protein-containing food product having improved liquid retainability.

EMBODIMENTS OF THE INVENTION

1. Production Method for Textured Plant Protein-Containing Food Product

A production method for a textured plant protein-containing food product of the present invention includes a step of causing a protein deamidase to act on a textured plant protein material. This makes it possible to enhance the liquid retainability of a textured plant protein-containing food product to be obtained. In a preferred embodiment, it is possible to improve digestibility, enhance a chewy texture, and/or lessen a plant raw material odor of a plant protein (particularly, hexanal leading to a soybean odor of soybean protein). Hereinafter, the production method for a textured plant protein-containing food product of the present invention will be specifically described.

1-1. Textured Plant Protein Material

The textured plant protein material used in the present invention is generally a food product material known as a meat substitute (pseudo meat), and typical examples thereof include a material in which a raw material mixture containing a plant protein and water is extruded with an extruder or the like and dried or frozen to be textured like meat. In the present invention, the "meat" imitated by the textured plant protein material means a muscle of an animal that is edible, and when described as "meat", the "meat" is used in the sense of including not only muscles of mammals and birds but also fish and shellfish.

Examples of the shape of the textured plant protein material include a granular shape and a fibrous shape. Examples of the granular shape include massive shapes having various sizes such as a small grain type (mince), a large grain type, and a block type (the size increases in the order of the small grain type, the large grain type, and the block type); and flat shapes of various sizes such as a flake type, a fillet type, and a slice type (the size increases in the order of the flake type, the fillet type, and the slice type).

When a shape is expressed in a size defined by an orthogonal tri-axial system (referring to three directions of length, width, and thickness; the maximum radial direction of the granular shape is set to coincide with at least one of the directions), examples of the massive shapes include a shape in which the longest value among the sizes in the three directions is about 1 to 3.7 times, preferably about 1 to 3.6 times the shortest value; and examples of the flat shapes include a shape in which the longest value among the sizes in the three directions is about 4 times or more, preferably 4.5 times or more, more preferably 4.8 times or more the shortest value.

As a specific size of the small grain type (mince) among the massive shapes, the longest value in the three directions (that is, the maximum diameter of the granular shape) is about 8 mm or less and preferably 7.5 mm or less; as a specific size of the large grain type, the longest value is more than 8 mm and 13 mm or less and preferably more than 9 mm and 12 mm or less; and as a specific size of the block type, the longest value is more than 13 mm and preferably more than 14 mm, more than 16 mm, or more than 18 mm. As a specific size of the flake type among the flat shapes, the longest value in the three directions (that is, the maximum diameter of the flat shape) is about 15 mm or less and preferably 12 mm or less; as a specific size of the fillet type, the longest value is more than 15 mm and 40 mm or less and preferably more than 20 mm and 35 mm or less; and as a specific size of the slice type, the longest value is more than 40 mm and preferably more than 45 mm.

From the viewpoint of further enhancing the liquid retainability, the shape of the textured plant protein is preferably a massive shape, and more preferably a block shape.

More specific examples of the textured plant protein material include a granular plant protein and a fibrous plant protein. Both the granular plant protein and the fibrous plant protein refer to those defined in "Japanese Agricultural Standards of plant protein". However, the textured plant protein material used in the present invention is not limited to the granular plant protein and the fibrous plant protein defined above as long as it is a material textured like meat as described above.

The content of the plant protein contained in the textured plant protein material (based on the weight in a dry state of the textured plant protein material) is not particularly limited, but is, for example, 20 wt% or more, 25 wt% or more, or 30 wt% or more. From the viewpoint of further enhancing the liquid retainability, or from the viewpoint of further improving the digestibility, further enhancing the chewy texture, and/or further lessening the plant raw material odor of the plant protein in addition to the viewpoint of further enhancing the liquid retainability, the content is preferably 35 wt% or more, more preferably 40 wt% or more, further preferably 45 wt% or more, and still more preferably 50 wt% or more. The upper limit of the content range is not particularly limited, and is, for example, 90 wt% or less, preferably 80 wt% or less, more preferably 70 wt% or less, and further preferably 60 wt% or less.

Regarding the textured plant protein material that can be used in the present invention, the kind of the plant protein, the characteristics other than the content ratio of the plant protein (for example, properties, moisture content, grain size, product temperature, raw materials other than food additives, food additives, chewiness, water retentivity, foreign matters, and content amount), and the measurement method thereof can conform to the characteristics and the measurement method defined in "Japanese Agricultural Standards of plant protein".

The origin of the plant protein is not particularly limited, and examples thereof include pulses such as soybean, fava bean, pea, chickpea, green bean, lupine bean, and kidney bean; cereals such as barley, rice, wheat, rye, oats, buckwheat, Japanese barnyard millet, foxtail millet, teff, quinoa, and corn; nuts and seeds such as industrial hemp, canary seed, linseed, almond, cashew nut, hazelnut, pecan nut, macadamia nut, pistachio, walnut, brazil nut, peanut, coconut, pilinut, chestnut, sesame, and pine nut; and algae.

As the plant protein, one kind of the above-described plant proteins may be used singly, or a plurality of kinds thereof may be used in combination.

Among the above-described plant proteins, from the viewpoint of further enhancing the liquid retainability, or from the viewpoint of further improving the digestibility, further enhancing the chewy texture, and/or further lessening the plant raw material odor of the plant protein in addition to the viewpoint of further enhancing the liquid retainability, a pulse-derived protein is preferably mentioned, and a soybean-derived protein is more preferably mentioned.

1-2. Protein Deamidase

The type, origin, and the like of the protein deamidase used in the present invention are not particularly limited as long as the protein deamidase is an enzyme that exhibits an action of decomposing an amide group-containing side chain of a protein without cleaving peptide bonds and crosslinking the protein. Examples of the protein deamidase include a protein deamidase derived from the genus Chryseobacterium, Flavobacterium, Empedobacter, Sphingobacterium, Aureobacterium, or Myroides, which is disclosed in Japanese Patent Laid-open Publication Nos. 2000-50887 and 2001-218590, and WO 2006/075772 A. These protein deamidases may be used singly or in combination of a plurality of kinds thereof.

Among these protein deamidases, from the viewpoint of further enhancing the liquid retainability of the textured plant protein-containing food product, or from the viewpoint of further improving the digestibility, further enhancing the chewy texture, and/or further lessening the plant raw material odor of the plant protein in addition to the viewpoint of further enhancing the liquid retainability, a protein deamidase derived from the genus Chryseobacterium is preferable, a protein glutaminase derived from the genus Chryseobacterium is more preferable, and a protein glutaminase derived from Chryseobacterium proteolyticum is further preferable.

The protein deamidase can be prepared from a culture solution of a microorganism from which the protein deamidase is derived. Specific examples of the preparation method include a method of recovering a protein deamidase from a culture solution or a bacterial cell of the above-mentioned microorganism. For example, in the case of using a microorganism that secretes protein deamidase, an enzyme can be separated and/or purified after recovering bacterial cells from the culture solution in advance by filtration, a centrifugal treatment, or the like, as necessary. In the case of using a microorganism that does not secrete protein deamidase, an enzyme can be separated and/or purified after recovering bacterial cells from the culture solution in advance as necessary and then disrupting the bacterial cells by a pressurization treatment, an ultrasonic treatment, or the like to expose an enzyme. As an enzyme separation and/or purification method, a known protein separation and/or purification method can be used without particular limitation, and examples thereof include a centrifugal separation method, a LTF concentration method, a salting-out method, and various chromatography methods using an ion-exchange resin or the like. The separated and/or purified enzyme can be powdered by a drying method such as freeze-drying or reduced-pressure drying, and can also be powdered using an appropriate excipient and/or drying aid in the drying method. The separated and/or purified enzyme can also be liquefied by adding an appropriate additive and performing filtration sterilization.

As the protein deamidase, a commercially available product can also be used, and examples of a preferred commercially available product include a protein glutaminase "Amano" 500 manufactured by Amano Enzyme Inc.

The used amount of the protein deamidase is not particularly limited, the amount of the protein deamidase per 1 g of protein is, for example, 0.01 to 1000 U, 0.05 to 500 U, or 0.1 to 100 U, and from the viewpoint of further enhancing the liquid retainability of the textured plant protein-containing food product, or from the viewpoint of further improving the digestibility, further enhancing the chewy texture, and/or further lessening the plant raw material odor of the plant protein in addition to the viewpoint of further enhancing the liquid retainability, the used amount is preferably 0.5 to 50 U, more preferably 1 to 40 U, further preferably 1.5 to 30 U, and still more preferably 2 to 22 U. The lower limit value of the range may be 3 U, 5 U, 7 U, 13 U, 15 U, or 17 U, and the upper limit value of the range may be 18 U, 16 U, 14 U, 8 U, or 6 U.

The amount of the protein deamidase per 1 g (dry weight) of the textured plant protein material is, for example, 0.01 to 1000 U, 0.05 to 500 U, or 0.08 to 200 U, and from the viewpoint of further enhancing the liquid retainability of the textured plant protein-containing food product, or from the viewpoint of further improving the digestibility, further enhancing the chewy texture, and/or further lessening the plant raw material odor of the plant protein in addition to the viewpoint of further enhancing the liquid retainability, the amount is preferably 0.1 to 100 U or 0.15 to 50 U, more preferably 0.2 to 20 U, and further preferably 0.8 to 12 U. The lower limit value of the range may be 6 U, 10 U, 14 U, 26 U, 30 U, or 34 U, and the upper limit value of the range may be 36 U, 32 U, 28 U, or 16 U.

For the activity of the protein deamidase, benzyloxycarbonyl-L-glutaminylglycine (Z-Gln-Gly) is used as a substrate, and the amount of enzyme that liberates 1 $\mu$mol of ammonia per minute is defined as 1 unit (1 U).

1-3. Reaction Operation and Conditions, etc.

In the step of causing a protein deamidase to act on a textured plant protein material, a textured plant protein mixture containing a textured plant protein material and a protein deamidase is appropriately prepared, and a reaction for improving the liquid retainability is advanced.

A method for preparing a textured plant protein mixture is not particularly limited, and may be, for example, a method of swelling a dried product of a textured plant protein with an aqueous solution containing a protein deamidase, or a method of swelling a dried product of a textured plant protein material with water and then mixing the swollen product with an aqueous solution containing a protein deamidase. Preferably, a method of swelling a dried product of a textured plant protein with an aqueous solution containing a protein deamidase is mentioned.

The treatment temperature of the mixture can be appropriately determined in consideration of the optimum temperature of the protein deamidase and the like, and is, for example, 4 to 80°C and preferably 8 to 70°C. The lower limit of the temperature range may be 15°C, 30°C, 45°C, or 55°C, and the upper limit of the temperature range may be 65°C, 50°C, 40°C, or 20°C. The treatment time is not particularly limited, and is, for example, 0.1 to 18 hours and preferably 0.5 to 15 hours.

The preparation operation of the textured plant protein mixture and the reaction operation for improving the liquid retainability may be performed in this order or simultaneously. As a preferred embodiment when both the operations are performed simultaneously, an embodiment in which a dried product of a textured plant protein material is swollen with a protein deamidase aqueous solution adjusted to a reaction temperature for improving the liquid retainability, and left to stand still for the above treatment time.

Powdered pea protein may be further mixed with the mixture for the purpose of further improving the binding properties. The used amount of the powdered pea protein is, for example, 5 to 20 parts by weight and preferably 10 to 13 parts by weight per 100 parts by weight of the textured plant protein material (swollen with moisture).

A base material, a binder, and/or other food materials can be mixed with the mixture as necessary. Examples of the base material include water (other than water impregnated into the swollen textured plant protein material) and/or oil. As the binder, one or two or more kinds selected from a binding agent (such as methyl cellulose), breadcrumbs, starch, eggs, and the like can be used. The other food materials can be appropriately determined by those skilled in the art according to the type of the textured plant protein-containing food product, and examples thereof include vegetables.

When water and/or oil is used as the base material, the content of water is, for example, 0.1 to 1.5 mL per 1 g of the swollen textured plant protein material, and from the viewpoint of further improving the liquid retainability, the content is preferably 0.2 to 1.2 mL, more preferably 0.3 to 1.1 mL, and further preferably 0.3 to 1 mL. The content of oil is, for example, 0.1 to 1 mL per 1 g of the swollen textured plant protein material, and from the viewpoint of further improving the liquid retainability, the content is preferably 0.2 to 0.75 mL and more preferably 0.4 to 0.7 mL. When water and oil are used as the base material, the content of oil per 1 mL of water is, for example, 0.1 to 4 mL.

The mixture after being treated with the protein deamidase can be molded into a shape suitable for a desired form as necessary, or further heat-cooked to obtain a textured plant protein-containing food product.

The heat-cooking method can be appropriately determined by those skilled in the art according to the type of the textured plant protein-containing food product. Specific examples of the heat-cooking method include boiling, firing (roasting, toasting, baking, grilling, or broiling), steaming, and frying. These heat-cooking methods may be used singly or in combination of a plurality of kinds thereof.

1-4. Textured Plant Protein-Containing Food Product

A specific form of a textured plant protein-containing food product obtained by the production method of the present invention can conform to livestock meat, chicken meat, and/or fish minced processed food products. That is, examples of the textured plant protein-containing food product of the present invention include meat-like processed food products (referring to food products imitating livestock meat, chicken meat, and/or fish minced processed food products). More preferably, examples of the textured plant protein-containing food product of the present invention include livestock meat and/or chicken meat-like processed food products (referring to food products imitating livestock meat and/or chicken meat processed food products). Such a livestock meat and/or chicken meat processed food product may be any food product that is cooked by molding and heating a meat type using the livestock meat and/or the chicken meat, and specific examples thereof include hamburg steak, meat balls, patty, meat loaf, minced-meat cutlet, and Chinese dumpling.

2. Textured Plant Protein-Containing Food Product

The present invention also provides a textured plant protein-containing food product produced by the production method described in "1. Production Method for Textured Plant Protein-Containing Food Product" above.

In the textured plant protein-containing food product of the present invention, at least an amide group-containing side chain of a plant protein is decomposed, and the liquid retainability is improved as compared with a textured plant protein-containing food product obtained by a production method not including a step of causing a protein deamidase to act on a textured plant protein material.

In a preferred embodiment, the textured plant protein-containing food product of the present invention further has improved digestibility, an enhanced chewy texture, and/or a lessened plant raw material odor of a plant protein (particularly, hexanal leading to a soybean odor of soybean protein), as compared with a textured plant protein-containing food product obtained by a production method not including a step of causing a protein deamidase to act on a textured plant protein material.

The type of the plant protein contained in the textured plant protein-containing food product, the shape of the textured plant protein, the specific form of the textured plant protein-containing food product, and the like are as described in the section of "1. Production Method for Textured Plant Protein-Containing Food Product".

3, Liquid Retainability Improver for Textured Plant Protein-Containing Food Product

As described above, the protein deamidase can improve the liquid retainability of the textured plant protein-containing food product. Therefore, the present invention also provides a liquid retainability improver for a textured plant protein-containing food product, the liquid retainability improver containing a protein deamidase.

The liquid retainability includes water retentivity and oil retentivity. An example of the method for evaluating the liquid retainability of the textured plant protein-containing food product includes a method in which the weight of a swollen product obtained by swelling a dried product of a textured plant protein material with a liquid (specifically, moisture) is measured, and the liquid retainability (specifically, water retentivity) is evaluated to be larger as the weight is larger. As another example of the method for evaluating the liquid retainability of the textured plant protein-containing food product includes a method in which a liquid loss rate with respect to the weight of the textured plant protein-containing food product before heat-cooking is derived from a weight difference before and after heat-cooking of the textured plant protein-containing food product, and the liquid retainability is evaluated to be larger as the liquid loss rate is smaller.

The component to be used, the used amount, the specific using method, and the like in the liquid retainability improver for a textured plant protein-containing food product are as described in the section of "1. Production Method for Textured Plant Protein-Containing Food Product".

4. Improver for Cohesiveness, Elasticity and/or Mastication Property of Textured Plant Protein-Containing Food Product

As described above, the protein deamidase can improve chewy texture of the textured plant protein-containing food product. The enhancement of the chewy texture of the textured plant protein-containing food product (preferably, the textured plant protein-containing food product after heat-cooking such as baking) can be evaluated based on the fact that at least any one of cohesiveness, elasticity, and mastication property of the textured plant protein-containing food product is improved (that is, enhanced). Therefore, the present invention also provides an improver for cohesiveness, elasticity and/or mastication property of a textured plant protein-containing food product, the improver containing a protein deamidase.

The component to be used, the used amount, the specific using method, and the like in the improver for cohesiveness, elasticity and/or mastication property of a textured plant protein-containing food product are as described in the section of "1. Production Method for Textured Plant Protein-Containing Food Product".

5. Agent for Lessening Plant Raw Material Odor of Textured Plant Protein-Containing Food Product

As described above, the protein deamidase can lessen a plant raw material odor of a plant protein (particularly, hexanal leading to a soybean odor of soybean protein) in a textured plant protein-containing food product. Therefore, the present invention also provides an agent for lessening a plant raw material odor of a textured plant protein-containing food product, the agent containing a protein deamidase.

The component to be used, the used amount, the specific using method, and the like in the agent for lessening a plant raw material odor of a textured plant protein-containing food product are as described in the section of "1. Production Method for Textured Plant Protein-Containing Food Product".

EXAMPLES

Hereinafter, the present invention will be specifically described by means of Examples; however, the present invention is not to be construed as being limited to the following Examples.

[A. Materials Used]

[Table 1]

| | | Origin | Shape Size | Protein content in dry material | Product name | Manufacturer |
|---|---|---|---|---|---|---|
| Textured plant protein material | Material (1) | Soybean | Mince 7 × 5 × 2 (mm) | 50 wt% | Soybean meat minced type | Marukome Co., Ltd. |
| | Material (2) | Soybean | Block 20 × 15 × 10 (mm) | 50 wt% | Soybean meat minced type | Marukome Co., Ltd. |
| | Material (3) | Pea | Block 15 × 10 × 6 (mm) | No information | Pea TVP | Sansho Co., Ltd. |
| | Material (4) | Pea | Slice 50 × 20 × 10 (mm) | 37 wt% | Meat made from pea Plant Meat Low-Carbo | Shizennoyakata |
| | | Origin | | | Product name | Manufacturer |
| Protein deamidase | PG | Chryseobacterium proteolyticum | | | Protein glutaminase "AMANO" 500 | Amano Enzyme Inc. |

[B. Measurement of Protein Deamidase Activity Value]

The enzyme activity measurement of the protein deamidase was performed using N-benzyloxycarbonyl-L-glutaminylglycine (Z-Gln-Gly; PEPTIDE INSTITUTE, INC.) as a substrate by the method described below.

Z-Gln-Gly was dissolved in a 0.2 mol/L phosphate buffer (pH 6.5) to prepare a 30 mmol/L solution, and the solution was used as a substrate solution. To a test tube, 0.1 mL of an enzyme solution whose activity is to be measured was placed, and left to stand in a constant-temperature water bath at 37 $\pm$ 0.5°C for 1 minute, and 1 mL of the substrate solution previously left to stand at 37 $\pm$ 0.5°C for 10 minutes was then added and immediately mixed. This solution was left to stand for 10 minutes to perform an enzymatic reaction, and then 1 mL of a 0.4 mol/L trichloroacetic acid solution was added to stop the enzymatic reaction. A measurement blank was prepared by adding 0.1 mL of an enzyme solution to a test tube, and adding 1 mL of a 0.4 mol/L trichloroacetic acid solution and 1 mL of a substrate solution in this order. A color development reaction by Ammonia Test Wako (FUJIFILM Wako Pure Chemical Corporation) was performed, and ammonia liberated by an enzymatic reaction for 10 minutes was quantified on the basis of a value of absorbance at a wavelength of 630 nm. The amount of enzyme that produces 1 pmol of ammonia per minute was defined as 1 unit (1 U), and the activity value was calculated from the amount of ammonia liberated by an enzymatic reaction.

[C. Production of Textured Plant Protein-Containing Food Product]

[1] A protein deamidase aqueous solution was added in an amount of 6 times the weight of 10 g of the textured plant protein material (dry material), and the mixture was left to stand still at 60°C for 60 minutes to swell the textured plant protein material, followed by washing with water. The amount of the protein deamidase used was set to 10 U per 1 g of the textured plant protein material (in terms of dry weight). The moisture was removed, and each 25 g of the swollen textured plant protein material was weighed to obtain a textured plant protein-containing food product (before seasoning).

[2] With the swollen textured plant protein material, 2.75 g of powdered pea protein (NUTRALYS F85M manufactured by Roquette Frères), 5 mL of water, 5 mL of olive oil, and methyl cellulose (final concentration: 2 wt%) were mixed, and the mixture was molded into a patty shape to obtain a textured plant protein-containing food product (after seasoning, before baking).

[3] The textured plant protein-containing food product (after seasoning, before baking) was baked at 180°C for 10 minutes. Thereby, patty was obtained as a textured plant protein-containing food product (after baking).

[Test Example 1]

A textured plant protein-containing food product (before seasoning) was produced by the method [1] of C above using the material (1) or the material (2) shown in A above as a material. The used amount of the protein deamidase per 1 g of soybean protein was 20 U. A comparative textured plant protein-containing food product (before seasoning) was also produced by performing the same operation except that the PG treatment was not performed.

<Liquid Retainability Evaluation 1>

The weight of the textured plant protein material (dry material) used in Step [1] of C above was denoted as "weight before rehydration", and the weight of the swollen textured plant protein material obtained in the step was defined as "weight after rehydration". The swollen textured plant protein material was left to stand at 60°C for 6 hours to be sufficiently dried, and the weight (denoted as "weight after drying") was measured again.

Relative values (%) of the weight after rehydration and the weight after drying when the weight before rehydration was taken as 100% were derived. As the relative value of the weight after rehydration is larger, the water retentivity is larger, and as the relative value of the weight after drying is larger, the loss (cooking loss) of the material itself due to entry and exit of moisture into and from the material can be evaluated to be smaller. The results are shown in Table 2 below.

[Table 2]

| | Conditions | | Weight before rehydration | Weight after rehydration (water retentivity) | Weight after drying (cooking loss) |
|---|---|---|---|---|---|
| Comparative Example 1 | Material (1) Soybean mince | Without PG treatment | 100% | 237% | 95% |
| Example 1 | | With PG treatment | 100% | 349% | 95% |
| Comparative Example 2 | Material (2) Soybean block | Without PG treatment | 100% | 202% | 90% |
| Example 2 | | With PG treatment | 100% | 298% | 91% |

As shown in Table 2, by subjecting the textured plant protein material to the PG treatment, the weight after rehydration (water retentivity) was remarkably increased as compared with the case without the PG treatment. On the other hand, since the water retentivity was remarkably improved, the loss (cooking loss) of the material itself was not observed although the amount of water entering and exiting due to rehydration and drying was large, as compared with the case without the PG treatment.

[Test Example 2]

A textured plant protein-containing food product (after baking) was produced by the methods [1] to [3] of C above using the material (1) shown in A above as a material. However, among the other materials used in [2] of C above, the amount of water was changed to 10 to 30 mL, and the amount of olive oil (hereinafter, simply referred to as "oil") was changed to 10 to 18 mL. The used amount of the protein deamidase per 1 g of soybean protein was 20 U. A comparative textured plant protein-containing food product (after baking) was also produced by performing the same operation except that the PG treatment was not performed.

<Liquid Retainability Evaluation 2>

The weight of the textured plant protein-containing food product (after seasoning, before baking) and the weight of the textured plant protein-containing food product (after baking) were measured, and the liquid loss rate was derived based on the following formula. In comparison between variations in which the amount of oil is fixed and other conditions are changed in [2] of C above, the tendency of moisture loss (water retentivity) can be evaluated. In comparison between variations in which the amount of water is fixed and other conditions are changed in [2] of C above, the tendency of oil content loss (oil retentivity) can be evaluated. The results are shown in Tables 3 and 4 below.

$$[\text{Mathematical Formula 1}]$$

$$\text{Liquid loss rate (\%)} = (W1 - W2)/W1 \times 100$$

W1: Weight before baking (g)
W2: Weight after baking (g)

[Table 3]

| | Condition | Water (mL) | Oil (mL) | Liquid loss rate (%) |
|---|---|---|---|---|
| Comparative Example 3 | Without PG treatment | 10 | 5 | 7.8 |
| Comparative Example 4 | | 15 | | 13.6 |
| Comparative Example 5 | | 20 | | 16.3 |
| Comparative Example 6 | | 25 | | 20 |
| Comparative Example 7 | | 30 | | 24 |
| Example 3 | With PG treatment | 10 | 5 | 6.4 |
| Example 4 | | 15 | | 10.1 |
| Example 5 | | 20 | | 12.9 |
| Example 6 | | 25 | | 16 |
| Example 7 | | 30 | | 18.4 |

[Table 4]

| | Condition | Water (mL) | Oil (mL) | Liquid loss rate (%) |
|---|---|---|---|---|
| Comparative Example 8 | Without PG treatment | 5 | 10 | 8.4 |
| Comparative Example 9 | | | 12 | 10.9 |
| Comparative Example 10 | | | 14 | 14.2 |
| Comparative Example 11 | | | 16 | 16.6 |
| Comparative Example 12 | | | 18 | 20 |

(continued)

| | Condition | Water (mL) | Oil (mL) | Liquid loss rate (%) |
|---|---|---|---|---|
| Example 8 | | | 10 | 7.8 |
| Example 9 | | | 12 | 10 |
| Example 10 | With PG treatment | 5 | 14 | 12.8 |
| Example 11 | | | 16 | 15.3 |
| Example 12 | | | 18 | 17.9 |

As shown in Tables 3 and 4, it could be confirmed that, by subjecting the textured plant protein material to the PG treatment, the liquid loss rate due to baking was reduced, and thus the liquid retainability was improved. When a ratio of suppressing the liquid loss rate in the case of increasing the blending amount of water and the ratio of suppressing the liquid loss rate in the case of increasing the blending amount of oil were compared, the former had a higher ratio of suppressing the liquid loss rate, and thus it could be confirmed that the effect of improving the water retentivity was relatively high among the effects of improving the liquid retainability by subjecting the textured plant protein material to the PG treatment.

[Test Example 3]

A textured plant protein-containing food product (after baking) was produced by the methods [1] to [3] of C above using the material (1) shown in A above as a material. The used amount of the protein deamidase per 1 g of soybean protein was 20 U. A comparative textured plant protein-containing food product (after baking) was also produced by performing the same operation except that the PG treatment was not performed.

<Digestibility Evaluation>

The textured plant protein-containing food product (after baking) was subjected to a digestion test with reference to the INFOGEST method (Brodkorb et al. 2019 Nat. Protoc).
With 5 g of the textured plant protein-containing food product (after baking), 3.5 mL of artificial saliva and 0.5 mL of 0.77 mg/mL amylase were mixed, and the mixture was stirred at 160 rpm for 2 minutes in a water bath at 37°C. The composition of the artificial saliva was 0.28 M KCl, 0.07 mM $KH_2PO_4$, 0.26 mM $NaHCO_3$, 2.8 mM $MgCl_2$, 1.1 mM $(NH_4)_2CO_3$, and 1.5 mM $CaCl_2$ (pH 7.0).
Next, with 10 mL of the reaction solution with artificial saliva, 7.5 mL of artificial gastric juice and 1.6 mL of a 0.227 g/19.2 mL pepsin solution (Sigma-Aldrich) were mixed, and the mixture was stirred at 160 rpm for 2 hours in a water bath at 37°C. The composition of the artificial gastric juice was 0.10 M KCl, 0.01 M $KH_2PO_4$, 0.38 M $NaHCO_3$, 0.71 M NaCl, 1.82 mM $MgCl_2$, 7.58 mM $(NH_4)_2CO_3$, and 0.165 mM $CaCl_2$ (pH 3.0).
The residue after the digestion reaction was dried at 60°C overnight, and then the weight was measured. The amount of free amino nitrogen was quantified by the following method.
To 1.0 mL of the diluted solution obtained by appropriately diluting the supernatant after the digestion reaction, 0.5 mL of a ninhydrin reagent pH 6.7 (10% $Na_2HPO_4/12H_2O$, 6% $KH_2PO_4$, 0.50% ninhydrin, 0.30% fructose) was added and mixed. Thereafter, the mixture was boiled for 16 minutes, and the amount (mg/L) of free amino nitrogen was measured at an absorbance of 570 nm.

[Table 5]

| | Condition | Free amino nitrogen (mg/L) | Residue amount (g) |
|---|---|---|---|
| Comparative Example 13 | Without PG treatment | 41.4 | 2.5 |
| Example 13 | With PG treatment | 63.9 | 1.57 |

As shown in Table 5, it could be confirmed that, by subjecting the textured plant protein material to the PG treatment, the decomposition of the textured plant protein-containing food product (after baking) into free amino acids proceeded, and the digestibility was improved.

<Texture Evaluation>

For the textured plant protein-containing food product (after baking), cohesiveness, elasticity, and mastication property were measured using a rheometer (manufactured by SUN SCIENTIFIC CO., LTD.). The results are shown in Table 6 below.

Stress: Maximum force recorded during initial compression
Cohesiveness: Value obtained by dividing work area during second compression by area during first compression
Elasticity: Value obtained by dividing distance recorded during second compression by distance of first compression
Mastication property: Stress (N) × cohesiveness × elasticity

[Table 6]

|  | Condition | Cohesiveness | Elasticity | Mastication property (N) |
|---|---|---|---|---|
| Comparative Example 13 | Without PG treatment | 0.71 ± 0.05 | 0.68 ± 0.03 | 9.6 ± 1.2 |
| Example 13 | With PG treatment | 0.85 ± 0.06 | 0.81 ± 0.12 | 11.8 ± 1.5 |

As shown in Table 6, by subjecting the textured plant protein material to the PG treatment, cohesiveness, elasticity, and mastication property of the textured plant protein-containing food product (after baking) were improved, and a further change to a chewy texture could be confirmed.

[Test Example 4]

A textured plant protein-containing food product (before seasoning) was produced by the method [1] of C above using the material (1) shown in A above as a material. The used amount of the protein deamidase per 1 g of soybean protein was 20 U. Each textured plant protein-containing food product (before seasoning) was produced by changing the number of times of washing with water to 0 to 3 in the method of [1]. A comparative textured plant protein-containing food product (before seasoning) was also produced by performing the same operation except that the PG treatment was not performed.

The amount of hexanal that causes a soybean odor was analyzed by HS-HPME-GC/MS (Shimadzu; GC-2030). A relative amount of hexanal when the amount of hexanal in the textured plant protein-containing food product (before seasoning) at the number of times of washing of 0 in Comparative Example 14 was taken as "1" was derived. The results are shown in Table 7 below.

[Table 7]

|  | Condition | Hexanal relative amount | | |
|---|---|---|---|---|
|  |  | Washing once | Washing twice | Washing three times |
| Comparative Example 14 | Without PG treatment | 0.84 | 0.66 | 0.44 |
| Example 14 | With PG treatment | 0.69 | 0.29 | 0.18 |

As shown in Table 7, by subjecting the textured plant protein material to the PG treatment, the amount of hexanal could be reduced even with a small number of times of washing, and the plant raw material odor could be efficiently lessened.

[Test Example 5]

A textured plant protein-containing food product (after baking) was obtained by the methods [1] to [3] of C above using the material (1) shown in A above as a material. However, the amount of the protein deamidase used in [1] of C above was changed to the amount shown in Table 8 below. The liquid retainability evaluation 2 shown in Test Example 2 and the digestibility evaluation shown in Test Example 3 were performed. The results are shown in Table 8 below.

[Table 8]

| | PG added amount | | Liquid loss rate (%) | Free amino nitrogen (mg/L) |
|---|---|---|---|---|
| | Amount per 1 g of dry weight of textured plant protein material | Amount per 1 g of protein | | |
| Comparative Example 13 (additional test) | 0 U | 0 U | 10.9 | 46.2 |
| Example 15 | 1 U | 2 U | 8.4 | 69.0 |
| Example 16 | 2U | 4 U | 8 | 71 |
| Example 17 | 5U | 10 U | 8.1 | 70.9 |
| Example 13 (additional test) | 10 U | 20 U | 8.4 | 70.3 |

As shown in Table 8, even when PG was used in any amount, it could be confirmed that the liquid retainability and the digestibility were improved.

[Test Example 6]

A textured plant protein-containing food product (after baking) was obtained by the methods [1] to [3] of C above using each of the materials (1) to (4) shown in A above as a material. The liquid retainability evaluation 2 shown in Test Example 2 and the digestibility evaluation shown in Test Example 3 were performed. In the liquid retainability evaluation and the digestibility evaluation, for each of the liquid loss rate and the free amino nitrogen, a magnification based on the liquid loss rate and the free amino nitrogen in the corresponding Comparative Example was also calculated. The results are shown in Table 9 below.

[Table 9]

| | Textured plant protein material | | | PG added amount | | Liquid loss rate (%) | Free amino nitrogen (mg/L) |
|---|---|---|---|---|---|---|---|
| | | Origin | Shape Size | Amount per 1 g of dry weight of textured plant protein material | Amount per 1 g of protein | | |
| Comparative Example 13 (additional test) | Material (1) | Soybean | Mince 7 × 5 × 2 (mm) | 0 U | 0 U | 10.4 | 47 |
| Comparative Example 15 | Material (2) | Soybean | Block 20 × 15 × 10 (mm) | | | 11.5 | 60.9 |
| Comparative Example 16 | Material (3) | Pea | Block 15 × 10 × 6 (mm) | | | 12.8 | 35.6 |
| Comparative Example 17 | Material (4) | Pea | Slice 50 × 20 × 10 (mm) | | | 12.6 | 43.5 |

(continued)

| | Textured plant protein material | | | PG added amount | | Liquid loss rate (%) | Free amino nitrogen (mg/L) |
|---|---|---|---|---|---|---|---|
| | | Origin | Shape Size | Amount per 1 g of dry weight of textured plant protein material | Amount per 1 g of protein | | |
| Example 13 (additional test) | Material (1) | Soybean | Mince 7 × 5 × 2 (mm) | 10 U | 20 U | 7.8 [0.8 times] | 69.9 11.5 times] |
| Example 18 | Material (2) | Soybean | Block 20 × 15 × 10 (mm) | | 20 U | 7.9 [0.7 times] | 92.2 [1.5 times] |
| Example 19 | Material (3) | Pea | Block 15 × 10 × 6 (mm) | | (Unknown) | 8.6 [0.7 times] | 46.4 [1.3 times] |
| Example 20 | Material (4) | Pea | Slice 50 × 20 × 10 (mm) | | 27 U | 10.9 [0.9 times] | 57.8 [1.3 times] |

As shown in Table 9, it could be confirmed that, by subjecting the textured plant protein material to the PG treatment regardless of the origin and shape of the textured plant protein material, the liquid loss rate due to baking was reduced to improve the liquid retainability, and the decomposition into free amino acids proceeded to improve the digestibility. It could be confirmed that, when the textured plant protein material has a block shape, the liquid loss rate was particularly low, and the liquid retainability was particularly excellent. It could be confirmed that, when the origin of the textured plant protein material is soybean, the decomposition into free amino acids particularly proceeded, and the digestibility was particularly excellent.

[Test Example 7]

A textured plant protein-containing food product (after baking) was obtained by the methods [1] to [3] of C above using the material (1) shown in A above as a material. However, the temperature and time conditions in [1] of C above were changed to the conditions shown in Table 10 below. A comparative textured plant protein-containing food product (after baking) was also produced by performing the same operation except that the PG treatment was not performed. The liquid retainability evaluation 2 shown in Test Example 2 was performed. The results are shown in Table 10 below.

[Table 10]

| | Condition | Temperature! time conditions | Liquid loss rate (%) |
|---|---|---|---|
| Comparative Example 18 | Without PG treatment | 10°C/12 hours | 10.6 |
| Comparative Example 13 (additional test) | Without PG treatment | 60°C/60 minutes | 10.9 |
| Example 21 | With PG treatment | 10°C/12 hours | 8.4 |
| Example 13 (additional test) | With PG treatment | 60°C/60 minutes | 8.4 |

As shown in Table 10, regardless of the temperature and time conditions at the time of reacting with PG, the effect of improving the liquid retainability could be confirmed.

## Claims

1.    A production method for a textured plant protein-containing food product, the production method comprising a step of causing a protein deamidase to act on a textured plant protein material.

2. The production method according to claim 1, wherein the protein deamidase is protein glutaminase.

3. The production method according to claim 1, wherein the textured plant protein-containing food product is a meat-like processed food product.

4. A textured plant protein-containing food product produced by the production method according to claim 1.

5. A liquid retainability improver for a textured plant protein-containing food product, the liquid retainability improver comprising a protein deamidase.

6. An improver for cohesiveness, elasticity and/or mastication property of a textured plant protein-containing food product, the improver comprising a protein deamidase.

7. An agent for lessening a plant raw material odor of a textured plant protein-containing food product, the agent comprising a protein deamidase.

## INTERNATIONAL SEARCH REPORT

International application No.

**PCT/JP2022/041704**

| A. | CLASSIFICATION OF SUBJECT MATTER |
|---|---|

*A23J 3/14*(2006.01)i; *A23J 3/00*(2006.01)i; *A23L 13/00*(2016.01)i
FI:   A23J3/14; A23L13/00 A; A23J3/00 502

According to International Patent Classification (IPC) or to both national classification and IPC

| B. | FIELDS SEARCHED |
|---|---|

Minimum documentation searched (classification system followed by classification symbols)

A23J3/14; A23J3/00; A23L13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021/201277 A1 (AMANO ENZYME INC.) 07 October 2021 (2021-10-07) claims, paragraphs [0023], [0040], examples | 1-7 |
| X | WO 2021/187510 A1 (AMANO ENZYME INC.) 23 September 2021 (2021-09-23) claims, paragraphs [0019], [0073], examples | 1-7 |
| X | WO 2020/038611 A1 (RAISIO NUTRITION LTD.) 27 February 2020 (2020-02-27) claims, examples | 1-7 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 January 2023** | **31 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/041704**

| Patent document cited in search report | | | Publication date (day/month/year) | Patent family member(s) | | | Publication date (day/month/year) |
|---|---|---|---|---|---|---|---|
| WO | 2021/201277 | A1 | 07 October 2021 | (Family: none) | | | |
| WO | 2021/187510 | A1 | 23 September 2021 | (Family: none) | | | |
| WO | 2020/038611 | A1 | 27 February 2020 | WO | 2020/038541 | A1 | |
| | | | | WO | 2020/038601 | A1 | |
| | | | | EP | 3840584 | A1 | |
| | | | | EP | 3840583 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013009617 A
- JP 2018029565 A
- JP 2000050887 A
- JP 2001218590 A
- WO 2006075772 A

**Non-patent literature cited in the description**

- **BRODKORB et al.** *Nat. Protoc,* 2019